(19) Europäisches Patentamt
European Patent Office
Office européen des brevets

(11) EP 0 996 498 B1

(12) **EUROPÄISCHE PATENTSCHRIFT**

(45) Veröffentlichungstag und Bekanntmachung des Hinweises auf die Patenterteilung:
**30.05.2001 Patentblatt 2001/22**

(21) Anmeldenummer: **98941403.2**

(22) Anmeldetag: **22.07.1998**

(51) Int Cl.7: **B01F 5/06**, B21D 11/06

(86) Internationale Anmeldenummer:
**PCT/EP98/04607**

(87) Internationale Veröffentlichungsnummer:
**WO 99/04892 (04.02.1999 Gazette 1999/05)**

(54) **KONTINUIERLICHER, CHAOTISCHER KONVEKTIONSMISCHER, -WÄRMEAUSTAUSCHER UND -REAKTOR**

CONTINUOUS, CHAOTIC CONVECTION MIXER, HEAT EXCHANGER AND REACTOR

MELANGEUR CONTINU A CONVECTION CHAOTIQUE, ECHANGEUR THERMIQUE ET REACTEUR

(84) Benannte Vertragsstaaten:
**AT BE CH DE ES FR GB GR IE IT LI NL PT SE**

(30) Priorität: **24.07.1997 DE 19731891**
**11.07.1998 DE 19831247**

(43) Veröffentlichungstag der Anmeldung:
**03.05.2000 Patentblatt 2000/18**

(73) Patentinhaber: **Siemens Axiva GmbH & Co. KG**
**65926 Frankfurt am Main (DE)**

(72) Erfinder:
- **SCHIERHOLZ, Wilfried**
  **D-65239 Hocheim (DE)**
- **LAUSCHKE, Götz**
  **D-65929 Frankfurt (DE)**
- **OTT, Stefan**
  **D-65558 Oberneisen (DE)**
- **SCHMIDT, Ulrich**
  **D-65439 Flörsheim (DE)**
- **HEIN, Peter**
  **D-61169 Friedberg (DE)**

(56) Entgegenhaltungen:
**WO-A-94/12270**
**FR-A- 2 763 868**
**US-A- 4 410 281**
**US-A- 4 422 773**
**US-A- 4 599 773**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 996 498 B1

## Beschreibung

Die Erfindung betrifft eine Vorrichtung, insbesondere zum Mischen, für den Wärmeaustausch oder zum Durchführen von Reaktionen, aufweisend ein oder mehrere durchströmbare Elemente, die in Strömungsrichtung eine Mittellinie aufweisen.
Vorrichtungen der genannten Art sind bekannt, und zwar als kontinuierliche, chaotische Konvektionsmischer oder -wärmetauscher oder -reaktoren für Newton'sche und nicht-Newton'sche Fluide.

Daneben sind noch eine Vielzahl von Mischer- Wärmetauschertypen bekannt. Statische Mischer haben feststehende Einbauten, an denen der Mischvorgang beschleunigt wird. Bei anderen Mischertypen (Rührkessel, gerührter Rohrreaktor) wird das Mischen durch bewegliche Einbauten vorgenommen. Chaotische Mischer und Wärmetauscher (J. Fluid Mech., 1989, Vol. 209, pp 335 - 357, Experimental Thermal and Fluid Science, 1993, Vol 7, pp 333 - 344, Wo 94/12270) nutzen die durch Trägheit induzierten Sekundärströmungen in gekrümmten Rohren oder Kanälen zum Mischen aus.

Bei statischen Mischern kann es auf Grund von Rezirkulationsgebieten zu Ablagerungen an den Einbauten kommen. In den Rezirkulationsgebieten kann es weiterhin lokal zur Überhitzung des Fluids (hot spots) kommen. Mischsysteme mit bewegten Einbauten haben den Nachteil, daß sie konstruktiv aufwendiger sind als statische Mischer. Sie benötigen in der Regel einen Antrieb und eine Steuerung. Bei komplexen thermischen und rheologischen Fluiden können Effekte wie lokale Überhitzung und Degradation des Fluids wegen der hohen Scherraten an den Rührelementen auftreten. Bei den bekannten chaotische Mischern (WO 94/12270), können auf Grund der Strömungsführung bei größeren Volumenströmen Ablösebereiche auftreten. In diesen Rezirkulationsgebieten kann es dann zu Ablagerungen und zur lokalen Überhitzung kommen.

Der Erfindung lag daher die Aufgabe zugrunde, eine Vorrichtung der eingangs genannten Art zu finden, die keine Einbauten benötigt, sowie einfach und kompakt gebaut werden kann. Weiterhin soll eine gute Misch- und Wärmetauschwirkung - ohne die vorstehend diskutierten Nachteile - über einen weiten Viskositäts- und Volumenstrombereich erzielt werden können.

Diese Aufgabe wird erfindungsgemäß durch eine Vorrichtung der eingangs genannten Art gelöst, die dadurch gekennzeichnet ist, daß das oder die durchströmbaren Elemente zumindest abschnittsweise so geformt oder angeordnet sind, daß die aus der oder den Mittellinien gebildete Kurve ungefähr folgender Parameterdarstellung genügt:

$$\vartheta(t) = \begin{pmatrix} (-1)^{[t]}\ a(t)\ (\cos(2\pi t) - 1) \\ c(t)\,t \\ a(t)\ \sin(2\pi t) \end{pmatrix}$$

wobei die Parameter und Konstanten folgende Bedeutung haben:

- $\vartheta(t)$ Ortsvektor in einem kartesischen Koordinatensystem,
- t Parameter entlang der Kurve (9), $-\infty \leq t \leq +\infty$,
- [t] ganzzahliger Anteil von t,
- a(t) ein Krümmungsradius (10) mit $0 < |a(t)| < \infty$,
- c(t) ein Abstandsparameter mit $0 < |c(t)| < \infty$.

Gegenstand der Erfindung ist somit eine Vorrichtung, insbesondere zum Mischen, für den Wärmeaustausch oder zum Durchführen von Reaktionen, aufweisend ein oder mehrere durchströmbare Elemente, die in Strömungsrichtung eine Mittellinie aufweisen, dadurch gekennzeichnet, daß das oder die durchströmbaren Elemente zumindest abschnittsweise so geformt oder angeordnet sind, daß die aus der oder den Mittellinien gebildete Kurve ungefähr folgender Parameterdarstellung genügt:

$$\vartheta(t) = \begin{pmatrix} (-1)^{[t]} \; a(t) \; (\cos(2\pi t) - 1) \\ c(t)\,t \\ a(t) \; \sin(2\pi t) \end{pmatrix}$$

wobei die Parameter und Konstanten folgende Bedeutung haben:

- $\vartheta(t)$ Ortsvektor in einem kartesischen Koordinatensystem,
- $t$ Parameter entlang der Kurve (9), $-\infty \leq t \leq +\infty$,
- $[t]$ ganzzahliger Anteil von t,
- $a(t)$ ein Krümmungsradius (10) mit $0 < |a(t)| < \infty$,
- $c(t)$ ein Abstandsparameter mit $0 < |c(t)| < \infty$.

Dabei definiert ein Parameterbereich t für ein durchströmbares Element von einer ganzen Zahl zur nächsten ganzen Zahl eine sogenannte Schlaufe von 360° und zur übernächsten ganzen Zahl eine Doppelschlaufe.
Bevorzugte Ausgestaltungen ergeben sich aus den Unteransprüchen.
Bevorzugt ist eine Vorrichtung, die aus mehreren Schlaufen zusammengesetzt ist. Die Verbindung der Schlaufen kann durch die dem Fachmann bekannten Verfahren für lösbare (Flansche) oder unlösbare (Schweißung, Lötung) Verbindungen hergestellt werden. Es können auch die einzelnen Schlaufen über bekannte Verbindungsstücke, gerade oder gekrümmte Rohre, miteinander Verbunden sein. Auf diese Weise lassen sich beliebig viele unterschiedliche erfindungsgemäße Vorrichtungen herstellen. In einer derartigen Vorrichtung können a(t) und c(t) entlang der Kurve oder von Schlaufe zu Schlaufe variieren oder auch gleich sein. In einer bevorzugten Ausgestaltung genügt ein oder jedes durchströmbare Element und/oder ein oder jede Schlaufe genau oder abschnittsweise genau bzw, vollständig der Parameterdarstellung.

Weiter bevorzugt ist eine Ausgestaltung, in der die durchströmbaren Elemente so geformt oder angeordnet sind, daß die aus der oder den Mittellinien gebildete Kurve über die gesamte Vorrichtung der Parameterdarstellung genügt. Die durchströmbaren Elemente bzw. die Schlaufen haben vorzugsweise einen kreisförmigen, rechteckigen oder elliptischen Querschnitt. Sie liegen nicht auf einer Ebene im Raum sondern sind im Raum fortschreitend, hintereinander angeordnet. Die Mittellinie kann, was die Querschnittsfläche betrifft, eine Symmetrielinie sein. Bei symmetrischen oder näherungsweise symmetrischen Querschnitten sind Kurven, die in Strömungsrichtung gleiche Orte auf dem Umfang einzelner durchströmbarer Elemente miteinander verbinden, beispielsweise bei quaderförmigen Elementen bestimmte Ecken einzelner Elemente, gleichwertig zur Kurve aus den Mittellinien anzusehen, das heißt, diese Kurven (Kanten in Strömungsrichtung) genügen ebenfalls der Parameterdarstellung. Geringe Abweichungen der Kurven von der Parameterdarstellung insbesondere im Rahmen üblicher Fertigungs- und/oder Montagetoleranzen sind unschädlich.
Die Vorrichtung kann aus einem Stück bestehen oder aus mehreren Teilen zusammengesetzt sein. Auslegung und Herstellung können nach den gängigen Methoden erfolgen. Als Werkstoffe kommen alle dem Fachmann geläufigen metallischen oder nichtmetallischen Werkstoffe in Frage, je nach Auslegung und Art der strömenden Fluide: Kunststoffe, Stähle (rost- oder säurebeständig), Glas, Keramik oder Sonderwerkstoffe.
Als Krümmungsradien a(t) der Mittellinie werden bevorzugt die in der deutschen DIN 2605 T1 angegebenen Vielfachen des Rohrdurchmessers verwendet. Eine typische Ausführung besteht z.B. aus einem Rohr mit dem Außendurchmesser D = 40 mm. Nach Bauart 5 der Norm ergibt sich ein Biegeradius von 100 mm. Eine Steigung (Abstandsparameter c (t)) von 100 mm pro Schlaufe von 360° erweist sich dann als vorteilhaft. Die Anzahl der Schlaufen orientiert sich an der Mischaufgabe. Eine typische Schlaufenanzahl ist 4 bis 8. Die Wanddicken d liegen üblicherweise im Bereich von 0.5 bis zu einigen mm, bei extremen Drücken bis zu 10 mm und mehr. In besonderen Ausgestaltungen hat das oder jedes durchströmbare Element einen Außendurchmesser D aus dem Bereich von 1 bis 200 mm, bevorzugt 5 bis 100 mm, besonders bevorzugt 10 bis 50 mm und der Krümmungsradius a(t) ist aus dem Bereich von $1^*D$ bis $7^*D$, bevorzugt $2^*D$ bis $5^*D$ gewählt. Der Abstandsparameter c(t) wird mit Vorteil aus dem Bereich von $-20^*D$ bis $+20^*D$, bevorzugt $-10^*D$ bis $+10^*D$, besonders bevorzugt von $-5^*D$ bis $+5^*D$ gewählt, wobei er stets $\neq 0$ ist.

Die Vorteile der erfindungsgemäßen Vorrichtung sind im wesentlichen darin zu sehen, daß sie einfach aufgebaut und herstellbar ist und daß bei der Strömungsführung keine Ablösebereiche auftreten. Ein weiterer wichtiger Vorteil ist, daß auf Grund des Bildungsgesetzes eine sehr kompakte Bauform entsteht. Im Gegensatz zu statischen

Mischern mit Einbauten kann die erfindungsgemäße Vorrichtung leicht gereinigt werden, beispielsweise mit Molchen. Gegenüber dem aus der WO 94/12270 bekannten chaotischen Mischer hat die erfindungsgemäße Vorrichtung den Vorteil, daß sie sich gut zu kompakten Modulen zusammensetzen läßt, beispielsweise in mehrgängigen Wärmeaustauschern. In einer solchen Anordnung ergibt sich zudem noch ein verbesserter Wärmeaustausch für das Mantelfluid durch hohe Anströmfläche und intensive Verwirbelung.

Die erfindungsgemäße Vorrichtung wird im folgenden anhand der in den Figuren 1,2,5,6 perspektivisch dargestellten beispielhaften Ausgestaltungen weiter erläutert. Fig. 3 zeigt das Ergebnis eines numerischen Experiments, Fig. 4 einen Ausschnitt aus Fig. 2 im Querschnitt. Eine Beschränkung der Erfindung auf irgendeine Weise, insbesondere auf diese Ausgestaltungen, ist nicht beabsichtigt.

Fig. 1 zeigt eine erfindungsgemäße Vorrichtung 1, die aus einem einzigen Rohr 2 mit kreisförmigem Querschnitt geformt ist, das eine Mittellinie 3 in Strömungsrichtung (Pfeil) aufweist, die eine Kurve 9 bildet. Mit eingezeichnet ist ein kartesisches Koordinatensystem 8 mit den Raumrichtungen x, y und z. Man kann sich die Vorrichtung 1 aber auch in vier Schlaufen 6a, 6b, 6c, 6d und zwei gerade Rohre 15 zerlegt denken, wobei die Schlaufen 6 alternierend versetzt hintereinander angeordnet sind. Am Anfang und Ende der Schlaufenanordnung sind gerade Rohre 15 angesetzt. Eingezeichnete Trennungslinien 17 kennzeichnen die Übergänge zwischen den einzelnen Schlaufen 6 bzw. Rohren 15. Der Abstand der hintereinander liegenden Schlaufen 6a, 6c, bzw 6b, 6d ist durch eine Strecke 7 dargestellt, die im gezeichneten Fall $2^{*}c(t)$, d.h. der doppelten Steigung entspricht. Die Projektion der Kurve 9 der kreisförmigen Elemente 6a, 6b, 6c, 6d in die xz-Ebene kennzeichnet den Radius a(t) 10, der ebenfalls entlang der Kurve variieren kann. In Fig. 2 besteht die Vorrichtung 1 zumindest abschnittsweise aus einzelnen durchströmbaren Elementen 16 mit rechteckigem Querschnitt, die über Flansche 5 miteinander verbunden sind. Fig. 4 zeigt einen Querschnitt durch einen solchen Abschnitt. Hier ist dargestellt, wie die Mittellinien 3 der Elemente 16 eine Kurve 9 bilden. Ebenso dargestellt ist eine der Kurve 9 gleichwertige Kurve 12, die Eckpunkte der einzelnen Elemente 16 verbindet. Bei einem entsprechend geformten bzw. gebogenen quaderförmigen Element 16 kann auch eine Kante 4 dieses Elements 16 eine Kurve 9 bilden, die der Mittellinie 3 gleichwertig ist und der Parameterdarstellung genügt.

Die Fig. 3 zeigt das Ergebnis eines numerischen Experiments zum Mischen zweier Fluide 13,14, deren Viskositäten sich um den Faktor fünf unterscheiden, beispielsweise HCl 13 und Wasserglas 14, in der in Fig. 1 dargestellten Vorrichtung 1. In diesem Beispiel wurde die Anfangsbedingung so gewählt, daß sich das niederviskose Fluid 13 (HCl) im Kern und das höherviskose Fluid 14 (Wasserglas) im äußeren Bereich des Einlaufs (links unten) befindet. Die in der Legende dargestellten Graustufen kennzeichnen die Konzentration (Volumenanteile, schwarz=1, weiß=0) des niederviskosen Fluids 13. Deutlich sieht man das Voranschreiten des Mischvorgangs in den chaotischen Mischelementen, das heißt in den Schlaufen 6. Bereits nach Durchlauf von drei Schlaufen 6 hat sich in diesem Fall eine gute Durchmischung eingestellt. Die Konzentration beider Fluide liegt über den gesamten Querschnitt etwa gleichmäßig etwa bei 0.5. Fig. 5 zeigt eine bevorzugte Ausgestaltung der erfindungsgemäßen Vorrichtung 1, bei der zwei Schlaufenpaare 6a,b und 6c,d durch ein gerades Rohr 15 verbunden sind. In der weiteren bevorzugten Ausgestaltung gemäß Fig. 6 sind Schlaufenpaare 6a,b und 6c,d durch S-förmige Rohrstücke 18 verbunden.

Damit kann der Fachmann auf einfache Weise nahezu beliebig viele unterschiedliche, kompakte, sehr gut mischende chaotische Konvektionsmischer herstellen.

Im folgenden werden erfindungsgemäße Mischer wie sie in den Fig. 1,5 und 6 dargestellt sind anhand dreier Parametersätze beispielhaft charakterisiert. Eine Beschränkung ist dadurch nicht beabsichtigt.

| Fig. 1 | | | |
|---|---|---|---|
| Schlaufe | t | a(t) | c(t) |
| 6a | 0-1 | $5^{*}R$ | $3^{*}R$ |
| 6b | 1-2 | $5^{*}R$ | $3^{*}R$ |
| Innenradius R= 1 mm (R = (D-2*d) /2) | | | |

| Fig. 5 | | | |
|---|---|---|---|
| Schlaufe | t | a(t) | c(t) |
| 6a | 0-1 | $5^{*}R$ | $5^{*}R$ |
| 6b | 1-2 | $5^{*}R$ | $5^{*}R$ |
| 6c | 0-1 | $5^{*}R$ | $-5^{*}R$ |
| 6d | 1-2 | $5^{*}R$ | $-5^{*}R$ |

(fortgesetzt)

| Fig. 5 |
|---|
| Innenradius R=20 mm; die Schlaufen 6b und 6c sind durch ein gerades Element (Rohr 15) verbunden. |

| Fig. 6 | | | |
|---|---|---|---|
| Schlaufe | t | a(t) | c(t) |
| 6a | 0-1 | 5*R | 5*R |
| 6b | 1-2 | 5*R | 5*R |
| 6c | 0-1 | 5*R | -5*R |
| 6d | 1-2 | 5*R | -5*R |
| Innenradius R=20 mm; die Schlaufen 6b und 6c sind durch ein S-förmig gekrümmtes Element (Rohr 18) verbunden. | | | |

Gegenstand der Erfindung ist weiter ein Verfahren zur Herstellung einer erfindungsgemäßen Vorrichtung, bei dem man ein Rohr um [t] zylindrische Formkörper biegt, die alternierend zu zwei zueinander parallelen Säulen angeordnet sind, wobei in jeden Formkörper am Umfang eine Führungsnut mit dem Krümmungsradius a(t) und einer Steigung ½* c(t) eingearbeitet ist, und wobei man das Rohr um den ersten Formkörper der ersten Säule biegt, änschließend um den ersten Formkörper der zweiten Säule, und anschließend die weiteren Formkörper alternierend auf die erste und zweite Säule steckt und das Rohr um diese weiteren Formkörper biegt.

Gegenstand der Erfindung ist weiter eine Vorrichtung zur Durchführung dieses Verfahrens, aufweisend eine Grundplatte, auf der mindestens zwei zylindrische Formkörper zu zwei Säulen in einem Abstand (b) parallel zueinander angeordnet sind,wobei die mindestens zwei zylindrischen Formkörper am Umfang eine Führungsnut mit einem Krümmungsradius a(t) und einer Steigung ½* c(t) für die Biegung des Rohres aufweisen und einzeln zu den Säulen zusammensteckbar sind.

Bevorzugte Ausführungsformen des Verfahrens bzw. der Vorrichtung sind in den jeweiligen Unteransprüchen offenbart.

Im folgenden werden diese Gegenstände anhand der Figuren 7 bis 10 näher beschrieben. Eine Beschränkung in irgend einer Weise ist dadurch nicht beabsichtigt.

Es zeigt:

Fig. 7 eine perspektivische Darstellung der erfindungsgemäßen Biegevorrichtung mit einem Rohr zu Beginn des Biegevorganges;

Fig. 8 eine perspektivische Darstellung der erfindungsgemäßen Biegevorrichtung mit einem Rohr nachdem eine Schlaufe gebogen wurde;

Fig. 9A,B eine Darstellung der erfindungsgemäßen Biegevorrichtung mit zwei Säulen zu je 3 Formkörpern in Seitenansicht und in geschnittener Seitenansicht;

Fig. 10 eine Darstellung der erfindungsgemäßen Biegevorrichtung in der Draufsicht;

Fig. 11 einen Wärmeaustauscher mit erfindungsgemäß hergestellten Doppelschlaufen

Um die Strömung in und um eine Doppelschlaufe 6a, 6b der erfindungsgemäßen Vorrichtung 1 nach Anspruch 1 - im folgenden "Chaotischen Mischer" bzw. "CM" genannt - zu führen, ist es vorteilhaft, diese ohne Fügetechniken herzustellen. Dazu wird ein Stück Rohr 2 auf die Länge der Mischstrecke gebracht und in einer modular gestalteten Biegevorrichtung 22 geeignet verformt

Die Biegevorrichtung 22 weist u.a. mehrere, vorzugsweise zylindrischen Formkörper 23 auf, die ineinandergesteckt werden können und zu zwei parallel zueinander verlaufenden Säulen 29, 32 angeordnet sind. Die Zahl der Formkörper 23 ist gleich der Zahl [t] der Schlaufen 6a, 6b .... Die Säulen 29, 32 aus Formkörpern 23 sind auf einer Grundplatte 30 in einem Abstand b zueinander befestigt. In die Formkörper 23 ist am Umfang zur Führung des Rohrs 2 beim Biegen eine Führungsnut 31, vorteilhafterweise mit mindestens einem Viertel des Rohrquerschnitt, bevorzugt mit halbem Rohrquerschnitt, mit der Steigung ½* c(t) eingearbeitet, z.B. durch Fräßen oder über ein Gießverfahren.

Die Formkörper 23 sind ineinandersteckbar und gegeneinander verdrehbar, so daß der Übergang der Führungsnut 31 (Einfräßung) von einem ersten Formkörper 23 auf einer ersten Säule 29 zu dem darauffolgenden auf der zweiten Säule 32 stufenlos ist. Aus diesem Grund ist der erste Formkörper 23 der zweiten Säule 32 bzw. seine Nut 31 um das der Steigung entsprechende Maß erhöht. Die Formkörper 23 weisen eine vollständige Nut 31 von mindestens 90°, bevorzugt 180°, besonders bevorzugt 360° auf.

Zur Biegung eines CM 1 nach Fig. 1 sind zwei Arten von Formkörpern 23 erforderlich: a) mit Linkssteigung und b) mit Rechtssteigung, d.h. daß die Steigung der Führungsnut 31 der Formkörper 23 a) das umgekehrte Vorzeichen der von b) hat.

Jeweils eine Art (a) oder b)) kommt in einer Säule 29, 32 aus ineinandergesteckte Formkörpern 23 vor. Dadurch entsteht nach dem Biegen des Rohres 2 um die Formkörper 23 a) und b) eine achtförmige Doppelschlaufe 6a, 6b mit definierter Steigung. Je nach dem Abstand b der Säulen 29, 32 zueinander kann die Form der Doppelschlaufen 6a, 6b von der in Fig. 1 gezeigten Form abweichen.

Der Biegevorgang gestaltet sich folgendermaßen:

Das Rohrende, von dem aus der Biegevorgang eines CM-Elementes ausgehen soll, ist auf der Grundplatte 30 mittels eines Lagers 30 a fixiert (Fig. 7).

Das Rohr 2 wird mit Hilfe einer Führungsrolle 34, die an einem Hebel 36 befestigt ist, um die Formkörper 23 a) gebogen, wobei der Hebel 36 auf das obere Ende der Säule 29 aus Formkörpern 23 a) gesteckt und in der Höhe verschiebbar ist. Nachdem das Rohr 2 um diesen Formkörper 23 a) in ausreichendem Maße gebogen wurde (Fig. 7 strichpunktiert), wird ein Formkörper 23 b) auf die Säule 32 gesteckt. Der Hebel 36 wird ebenfalls auf die Säule 32 oben aufgesteckt und das Rohr 2 dann in der anderen Richtung weitergebogen (Fig. 8). Dabei ist zu beachten, daß das Rohr 2, bevor es weitergebogen wird, drucklos an jedem neu aufgesteckten Formkörper 23 anliegt, bzw. in deren Führungsnut 31 einliegt, da es sonst zu Deformationen des gesamten CM-Elementes kommt, wenn die Formkörper 23 herausgenommen werden. Das Rohr 2 ist also über den elastischen Bereich hinaus, plastisch zu verformen. Anschließend wird ein weiterer Formkörper 23 a) sowie der Hebel 36 auf die Säule 29 aufgesteckt, und es wird wie vorbeschrieben weitergebogen. Diese Vorgänge werden so lange wiederholt, bis die gewünschte Zahl von Schlaufen 6a, 6b ... hergestellt wurde.

Die Formkörper 23 werden nach Beendigung des gesamten Biegevorganges aus dem CM-Element herausgeschraubt. Durch diese Vorgehensweise sind die Formkörper 23 als Matrizen wiederholt einsetzbar und können zu Herstellung mehrerer, gleicher CM-Elemente 6a, 6b ... benutzt werden.

Der erste Formkörper 23, in den das Rohr 2 eingelegt wird, unterscheidet sich von den übrigen dadurch, daß die Führungsnut 31 am Anfang ein Stück horizontal verläuft, um erst im weiteren Verlauf auf dem Umfang in die geforderte Steigung überzugehen. Dadurch wird das Einlegen des Rohres 2 in den Formkörper 23 wesentlich erleichtert.

Weiter sind folgende Punkte zu beachten:

Die Rohrinnen- und Außendurchmesser sind den Erfordernissen entsprechend zu wählen. Sie können von Außendurchmesser 2 mm bis 500 mm reichen.

Als Rohrwerkstoff sind den Erfordernissen entsprechende, korrosionsbeständige Metalle oder geeignete Kunststoffe zu wählen, wobei Kunsstoffrohre für den Biegevorgang gegebenenfalls erwärmt werden müssen.

Die Formkörper 23 sollten aus einem geeigneten Material gefertigt sein, das mit dem Werkstoff des Rohres nicht zu Problemen beim Biegevorgang, wie z.B. Fressen, führt.

Der Rohrquerschnitt sollte sich aufgrund des Biegevorganges nicht wesentlich verformen. ideal ist der Kreisquerschnitt. Geringe Abweichungen sind tolerierbar.

Wird der CM im Betrieb mit Druck belastet, ist darauf zu achten, daß die thermische Belastung während des Biegens die Festigkeit nicht zu stark herabsetzt.

Das Rohr sollte während des Biegens mit geeignetem Füllmaterial ausgefüllt sein.

Die Übergänge vom gebogenen auf ein gerades Stück Rohr sollten ohne Unstetigkeiten wie Knicke, d.h. tangential gestaltet werden.

Die Säulen 29, 32 aus ineinandergesteckten Formkörpern 23 sind in einer Grundplatte 30 von geeigneter Stärke zu halten. Der Abstand b der Säulen 29, 32 zueinander bestimmt sich unter anderem nach den Abmessungen und Biegeeigenschaften der verwendeten Rohre.

Die Hauptmaße der CM-Elemente können in folgenden Bereichen liegen: Abstand b: 10 mm bis 5000 mm, Durchmesser $D_{CM}$ (Fig. 10): 5 mm bis 3000 mm, Steigungswinkel $\alpha$, der mit der Steigung c(t) korelliert ist, (Fig. 9B) pro Formkörper 23: 1 bis 60 Grad.

Die Vorteile dieses erfindungsgemäßen Verfahrens sind im wesentlichen darin zu sehen, daß, bedingt durch den modularen Aufbau und das wechselseitige Aufstecken der Formkörper zu einer Säule, Rohre "beliebiger" Länge endlos zu chaotischen Mischern gebogen werden können.

Fig. 11 zeigt beispielhaft wie drei erfindungsgemäß hergestellte CM-Elemente 37 zu einem kompakten, effektiv arbeitenden Wärmeaustauscher 38 zusammengebaut werden können.

## Patentansprüche

1. Vorrichtung (1), insbesondere zum Mischen, für den Wärmeaustausch oder zum Durchführen von Reaktionen, aufweisend ein oder mehrere durchströmbare Elemente (2), die in Strömungsrichtung eine Mittellinie (3) aufweisen, dadurch gekennzeichnet, daß das oder die durchströmbaren Elemente (2) zumindest abschnittsweise so geformt oder angeordnet sind, daß die aus der oder den Mittellinien (3) gebildete Kurve (9) ungefähr folgender Parameterdarstellung genügt:

$$\vartheta(t) = \begin{pmatrix} (-1)^{[t]}\ a(t)\ (\cos(2\pi t) - 1) \\ c(t)\,t \\ a(t)\ \sin(2\pi t) \end{pmatrix}$$

wobei die Parameter und Konstanten folgende Bedeutung haben:

$\vartheta(t)$ Ortsvektor in einem kartesischen Koordinatensystem (8),

t Parameter entlang der Kurve (9), $-\infty \leq t \leq +\infty$,

[t] ganzzahliger Anteil von t,

a(t) ein Krümmungsradius (10) mit $0 < |a(t)| < \infty$,

c(t) ein Abstandsparameter mit $0 < |c(t)| < \infty$.

2. Vorrichtung nach Anspruch 1, dadurch gekennzeichnet, daß für ein oder mehrere durchströmbare Elemente (2) die Kurve (9) vollständig der Parameterdarstellung genügt, wobei t von 0 bis 1 läuft.

3. Vorrichtung nach Anspruch 1, dadurch gekennzeichnet, daß für ein oder mehrere durchströmbare Elemente (2) die Kurve (9) vollständig der Parameterdarstellung genügt, wobei t von 1 bis 2 läuft.

4. Vorrichtung nach mindestens einem der Ansprüche 1 bis 3, dadurch gekennzeichnet, daß das oder jedes durchströmbare Element (2) einen Außendurchmesser D aus dem Bereich von 1 bis 200 mm, bevorzugt 5 bis 100 mm, besonders bevorzugt 10 bis 50 mm aufweist und daß a(t) aus dem Bereich von 1*D bis 7*D, bevorzugt 2*D bis 5*D gewählt ist.

5. Vorrichtung nach mindestens einem der Ansprüche 1 bis 3, dadurch gekennzeichnet, daß das oder jedes durchströmbare Element (2) einen Außendurchmesser D aus dem Bereich von 1 bis 200 mm, bevorzugt 5 bis 100 mm, besonders bevorzugt 10 bis 50 mm aufweist und daß c(t) aus dem Bereich von -10*D bis +10*D, bevorzugt -5*D bis +5*D gewählt ist.

6. Vorrichtung nach mindestens einem der Ansprüche 1 bis 5, dadurch gekennzeichnet, daß ein oder mehrere durchströmbaren Elemente (2) einen elliptischen oder rechteckigen oder kreisförmigen oder quadratischen Querschnitt haben.

7. Verwendung einer Vorrichtung nach mindestens einem der Ansprüche 1 bis 6 zum Mischen oder für den Wärmeaustausch oder zur Durchführung von Reaktionen.

8. Verfahren zur Herstellung einer Vorrichtung (1) nach einem oder mehreren der Ansprüche 1 bis 6, bei dem man ein Rohr (2) um [t] zylindrische Formkörper (23) biegt, die alternierend zu zwei zueinander parallelen Säulen (29, 32) angeordnet sind, wobei in jeden Formkörper (23) am Umfang eine Führungsnut (31) mit dem Krümmungsradius

(10) a(t) und einer Steigung ½* c(t) eingearbeitet ist, und wobei man das Rohr um den ersten Formkörper (23) der ersten Säule biegt, anschließend um den ersten Formkörper (23) der zweiten Säule, und anschließend die weiteren Formkörper (23) alternierend auf die erste und zweite Säule steckt und das Rohr um diese weiteren Formkörper (23) biegt.

**9.** Verfahren nach Anspruch 8, dadurch gekennzeichnet, daß die Formkörper (23) auf den Säulen (29, 32) verdrehbar sind.

**10.** Verfahren nach Anspruch 8 oder 9, dadurch gekennzeichnet, daß der oder jeder Formkörper (23) eine Führungsnut (31) von wenigstens einem Viertel des Rohrquerschnitts aufweist.

**11.** Verfahren nach einem oder mehreren der Ansprüche 8 bis 10, dadurch gekennzeichnet, daß die Steigung der Führungsnut (31) des oder jeden Formkörpers (23) der zweiten Säule das entgegengesetzte Vorzeichen der Steigung der Führungsnut (31) des oder jeden Formkörpers (23) der ersten Säule hat.

**12.** Vorrichtung (22) zur Durchführung des Verfahrens nach einem oder mehreren der Ansprüche 8 bis 11, aufweisend eine Grundplatte (30), auf der mindestens zwei zylindrische Formkörper (23) zu zwei Säulen (29, 32) in einem Abstand (b) parallel zueinander angeordnet sind,wobei die mindestens zwei zylindrischen Formkörper (23) am Umfang eine Führungsnut (31) mit einem Krümmungsradius (10) a(t) und einer Steigung ½* c(t) für die Biegung des Rohres aufweisen und einzeln zu den Säulen (29, 32) zusammensteckbar sind.

**13.** Vorrichtung nach Anspruch 12, dadurch gekennzeichnet, daß die Formkörper (23) auf den Säulen (29, 32) verdrehbar sind.

**14.** Vorrichtung nach Anspruch 12 oder 13, dadurch gekennzeichnet, daß die Steigung der Führungsnut (31) der Formkörper (23) auf der ersten Säule ein anderes Vorzeichen hat als die auf der zweiten Säule.

**Claims**

**1.** A device (1), in particular for mixing, for heat exchange or for carrying out reactions, having one or more through-flow elements (2) which have a center line (3) in the direction of flow, wherein the through-flow element(s) (2) is/are at least partially shaped or arranged such that the curve (9) formed by the center line(s) (3) approximately satisfies the following parametric representation:

$$\vartheta(t) = \begin{pmatrix} (-1)^{[t]}\ a(t)\ (\cos(2\pi t) - 1) \\ c(t)\,t \\ a(t)\ \sin(2\pi t) \end{pmatrix}$$

the parameters and constants having the following meaning:

| | |
|---|---|
| $\vartheta(t)$ | position vector in a Cartesian coordinate system (8), |
| t | parameter along the curve (9), $-\infty \le t \le +\infty$, |
| [t] | integral fraction of t, |
| a(t) | a radius of curvature (10), where $0 < \|a(t)\| < \infty$, |
| c(t) | a spacing parameter, where $0 < \|c(t)\| < \infty$. |

**2.** The device as claimed in claim 1, wherein the curve (9) completely satisfies the parametric representation for one or more through-flow elements (2), t running from 0 to 1.

3. The device as claimed in claim 1, wherein the curve (9) completely satisfies the parametric representation for one or more through-flow elements (2), t running from 1 to 2.

4. The device as claimed in at least one of claims 1 to 3, wherein the or each through-flow element (2) has an outside diameter D in the range from 1 to 200 mm, preferably 5 to 100 mm, particularly preferably 10 to 50 mm, and a(t) is selected from the range from $1^*D$ to $7^*D$, preferably $2^*D$ to $5^*D$.

5. The device as claimed in at least one of claims 1 to 3, wherein the or each through-flow element (2) has an outside diameter D in the range from 1 to 200 mm, preferably 5 to 100 mm, particularly preferably 10 to 50 mm, and c(t) is selected from the range from $-10^*D$ to $+10^*D$, preferably $-5^*D$ to $+5^*D$.

6. The device as claimed in at least one of claims 1 to 5, wherein one or more through-flow elements (2) has or have an elliptical or rectangular or circular or square cross section.

7. The use of a device as claimed in at least one of claims 1 to 6 for mixing or for heat exchange or for carrying out reactions.

8. A method for producing a device (1) as claimed in one or more of claims 1 to 6, in which a tube (2) is bent around [t] cylindrical moulded parts (23) which are arranged in an alternating fashion relative to two mutually parallel columns (29, 32), a guide groove (31) with a radius (10) of curvature a(t) and lead of $1/2^*c(t)$ being recessed into each moulded part (23) on the circumference, and the tube being bent around the first moulded part (23) of the first column, subsequently around the first moulded part (23) of the second column, and subsequently the further moulded part (23) being plugged alternately onto the first and second column, and the tube being bent around these further moulded parts (23).

9. The method as claimed in claim 8, wherein the moulded part (23) can be rotated on the columns (29, 32).

10. The method as claimed in claim 8 or 9, wherein the or each moulded part (23) has a guide groove (31) of at least one quarter of the tube cross section.

11. The method as claimed in one or more of claims 8 to 10, wherein the lead of the guide groove (31) of the or each moulded part (23) of the second column has the opposite sign of the lead of the guide groove (31) of the or each moulded part (23) of the first column.

12. A device (22) for carrying out the method as claimed in one or more of claims 8 to 11, having a baseplate (30) on which at least two cylindrical moulded parts (23) are arranged to form two columns (29, 32) at a spacing (b) parallel to one another, the at least two cylindrical moulded parts (23) having on their circumference a guide groove (31) with a radius (10) of curvature a(t) and a lead of $1/2^*c(t)$ for bending the tube, and being capable of plugging together individually to form the columns (29, 32).

13. The device as claimed in claim 12, wherein the moulded parts (23) can be rotated on the columns (29, 32).

14. The device as claimed in claim 12 or 13, wherein the lead of the guide groove (31) of the moulded parts (23) on the first column has a different sign than that on the second column.

## Revendications

1. Dispositif (1), destiné en particulier au mélange, pour l'échange de chaleur ou pour la réalisation de réactions, présentant un ou plusieurs éléments (2) qui peuvent être traversés par l'écoulement, qui présentent dans la direction de l'écoulement une ligne médiane (3), caractérisé en ce que, le ou les éléments (2) qui peuvent être traversés par l'écoulement sont disposés ou mis en forme, au moins en coupe, de manière à ce que la ou les courbes (9) formées par la ou les lignes médianes (3) satisfassent à peu près à la représentation paramétrique suivante :

$$\vartheta(t) = \begin{pmatrix} (-1)^{[t]} \; a(t) \; (\cos(2\pi t) - 1) \\ c(t)\, t \\ a(t) \; \sin(2\pi t) \end{pmatrix}$$

dans laquelle les paramètres et constantes ont la signification suivante :

$\vartheta(t)$ vecteur de position dans un système de coordonnées cartésiennes (8),

t paramètre définissant la courbe (9), $- \infty \leq t \leq +\infty$

[t] partie entière de t,

a (t) un rayon de courbure (10) avec $0 < |a(t)| < \infty$,

c (t) un paramètre d'espacement avec $0 < |c(t)| < \infty$.

**2.** Dispositif selon la revendication 1, caractérisé en ce que, pour un ou plusieurs éléments (2) qui peuvent être traversés par l'écoulement la courbe (9) satisfait pleinement à la représentation paramétrique, dans laquelle t varie de 0 à 1.

**3.** Dispositif selon la revendication 1, caractérisé en ce que, pour un ou plusieurs éléments (2) qui peuvent être traversés par l'écoulement la courbe (9) satisfait pleinement à la représentation paramétrique, dans laquelle t varie de 1 à 2.

**4.** Dispositif selon au moins une des revendications 1 à 3, caractérisé en ce que le ou chaque élément (2) qui peut être traversé par l'écoulement présente un diamètre externe D dans le domaine compris entre 1 et 200 mm, de préférence entre 5 et 100 mm, de manière particulièrement préférée entre 10 et 50 mm et en ce que a(t) est choisi dans le domaine compris entre $1^*D$ et $7^*D$, de préférence entre $2^*D$ et $5^*D$.

**5.** Dispositif selon au moins une des revendications 1 à 3, caractérisé en ce que le ou chaque élément (2) qui peut être traversé par l'écoulement présente un diamètre externe D dans le domaine compris entre 1 et 200 mm, de préférence entre 5 et 100 mm, de manière particulièrement préférée entre 10 et 50 mm et en ce que c(t) est choisi dans le domaine compris entre $-10^*D$ et $+10^*D$, de préférence entre $-5^*D$ et $+5^*D$.

**6.** Dispositif selon au moins une des revendications 1 à 5, caractérisé en ce qu'un ou plusieurs éléments (2) qui peuvent être traversés par l'écoulement ont une section transversale elliptique ou rectangulaire ou circulaire ou carrée.

**7.** Utilisation d'un dispositif selon au moins l'une des revendications 1 à 6 pour le mélange ou pour l'échange de chaleur ou pour la réalisation de réactions.

**8.** Procédé de fabrication d'un dispositif (1) selon une ou plusieurs des revendications 1 à 6, dans lequel on plie un tube (2) autour de [t] pièces de forme (23) cylindriques, qui sont disposées en alternance sur deux colonnes parallèles entre elles (29, 32), dans lequel est incorporé à la périphérie dans chaque pièce de forme (23) une rainure de guidage (31) avec le rayon de courbure (10) a(t) et un pas $½^*$ c(t), et dans lequel on plie le tube autour de la première pièce de forme (23) de la première colonne, ensuite on l'enfiche autour de la première pièce de forme (23) de la deuxième colonne, et ensuite autour des autres pièces de forme (23) en alternant sur la première et la deuxième colonne et on plie le tube autour de ces autres pièces de forme (23).

**9.** Procédé selon la revendication 8, caractérisé en ce que, les pièces de forme (23) peuvent être en torsion sur les colonnes (29, 32).

**10.** Procédé selon la revendication 8 ou 9, caractérisé. en ce que, la ou chaque pièce de forme (23) présente une rainure de guidage (31) d'au moins un quart de la section transversale du tube.

**11.** Procédé selon une ou plusieurs des revendications 8 à 10, caractérisé en ce que, la pente de la rainure de guidage (31) du ou de chaque pièce de forme (23) de la deuxième colonne a un pas dans la direction opposée par rapport à la rainure de guidage (31) du ou de chaque pièce de forme (23) de la première colonne.

**12.** Dispositif (22) pour la réalisation du procédé selon une ou plusieurs des revendications 8 à 11, présentant une plaque de base (30), sur laquelle sont disposées au moins deux pièces de forme cylindriques (23), parallèles l'une par rapport à l'autre, sur deux colonnes (29, 32) à un écartement (b), dans lequel au moins les deux pièces de forme cylindriques (23) présentent à la périphérie une rainure de guidage (31) avec un rayon de courbure (10) a (t) et une pente ½ * c(t) pour le pliage du tube et sont en particulier enfichables ensemble sur les colonnes (29, 32).

**13.** Dispositif selon la revendication 12, caractérisé en ce que les pièces de forme (23) peuvent être en torsion sur les colonnes (29, 32).

**14.** Dispositif selon la revendication 12 ou 13, caractérisé en ce que la pente de la rainure de guidage (31) des pièces de forme (23) a une autre direction sur la première colonne que celle sur la deuxième colonne.

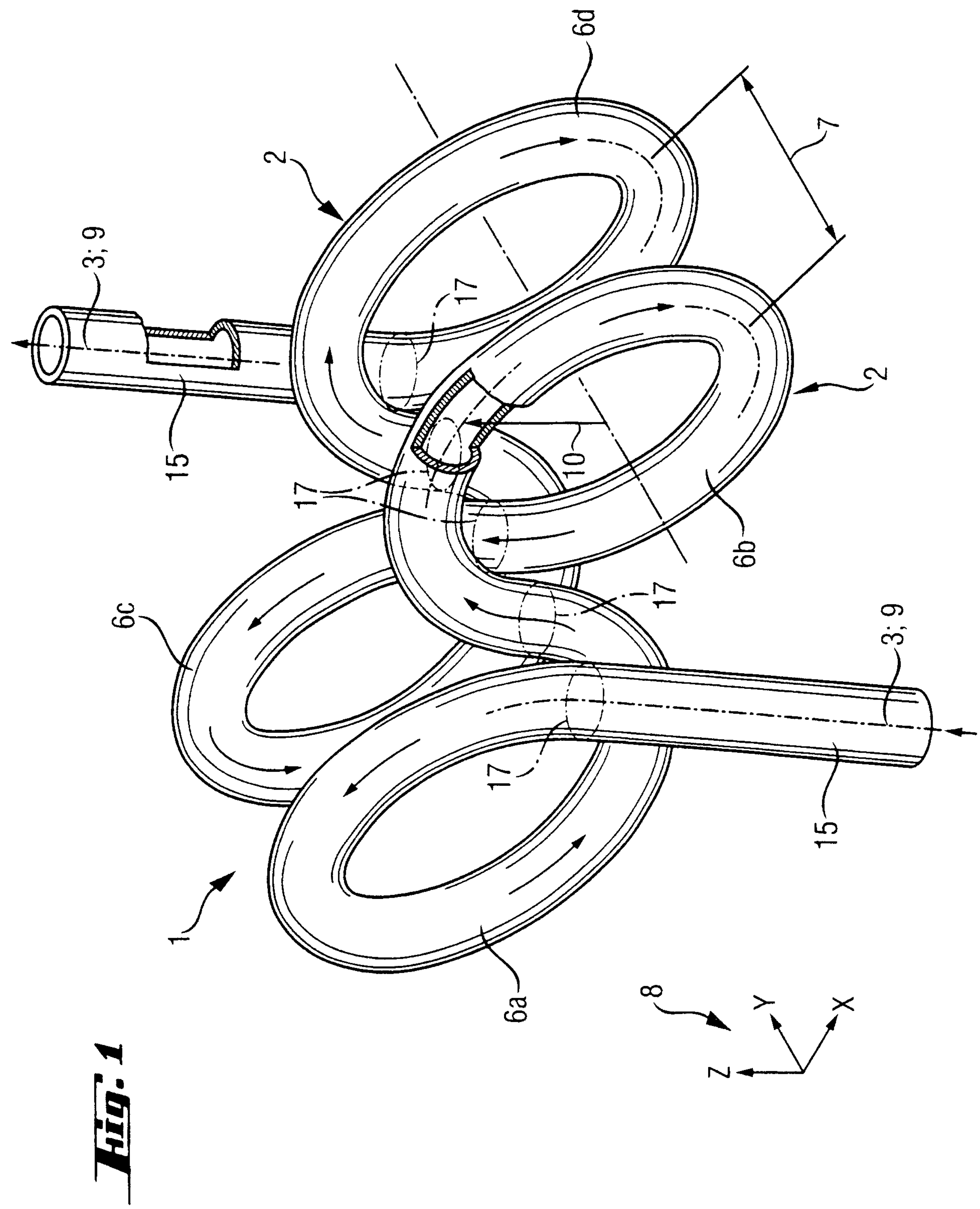


*Fig. 1*

Fig. 2

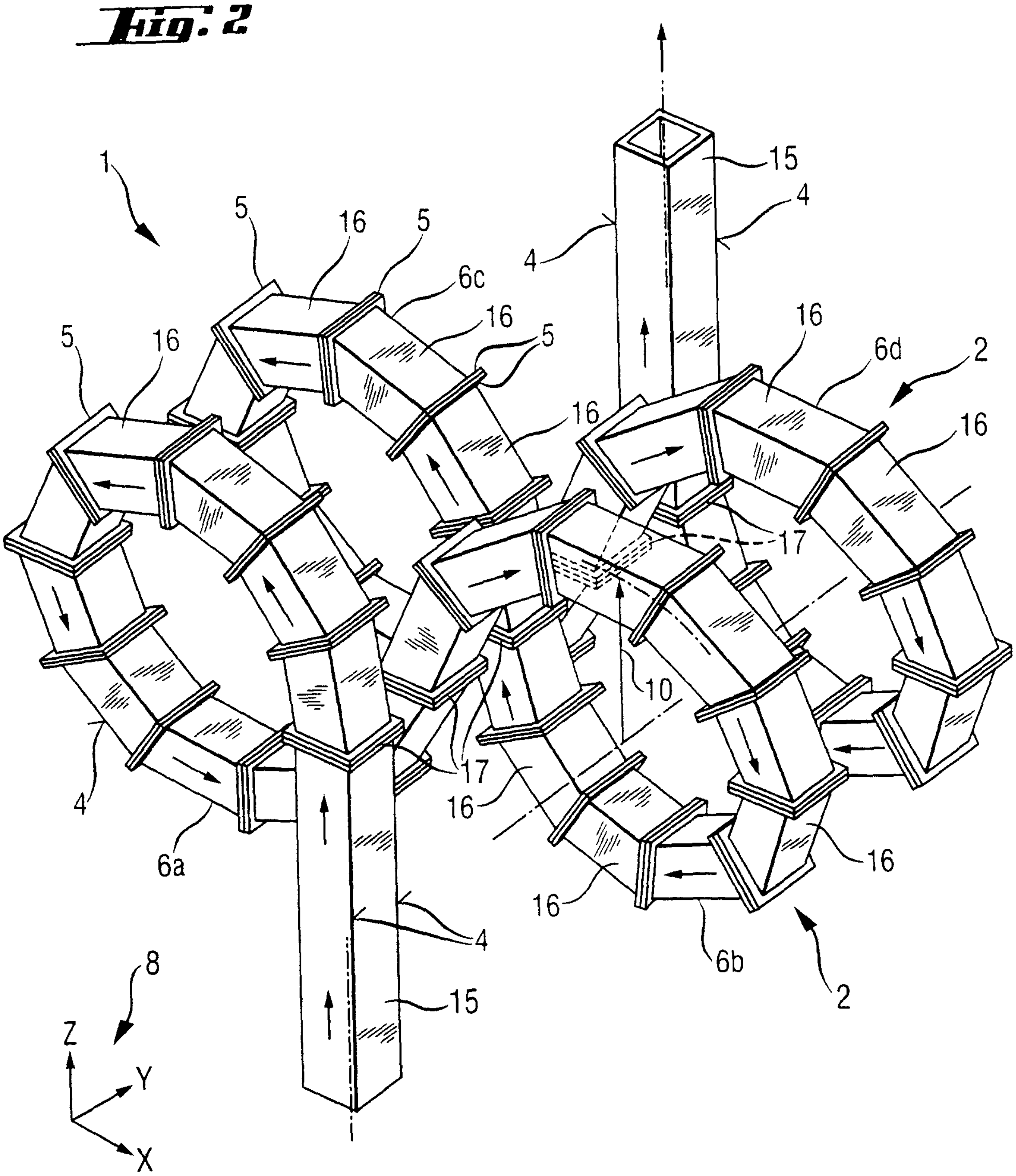
1
5
16
5
6c
16
5
15
4
4
16
6d
2
16
5
16
16
17
10
17
16
16
4
6a
4
16
16
6b
2
2
8
15
Z
Y
X

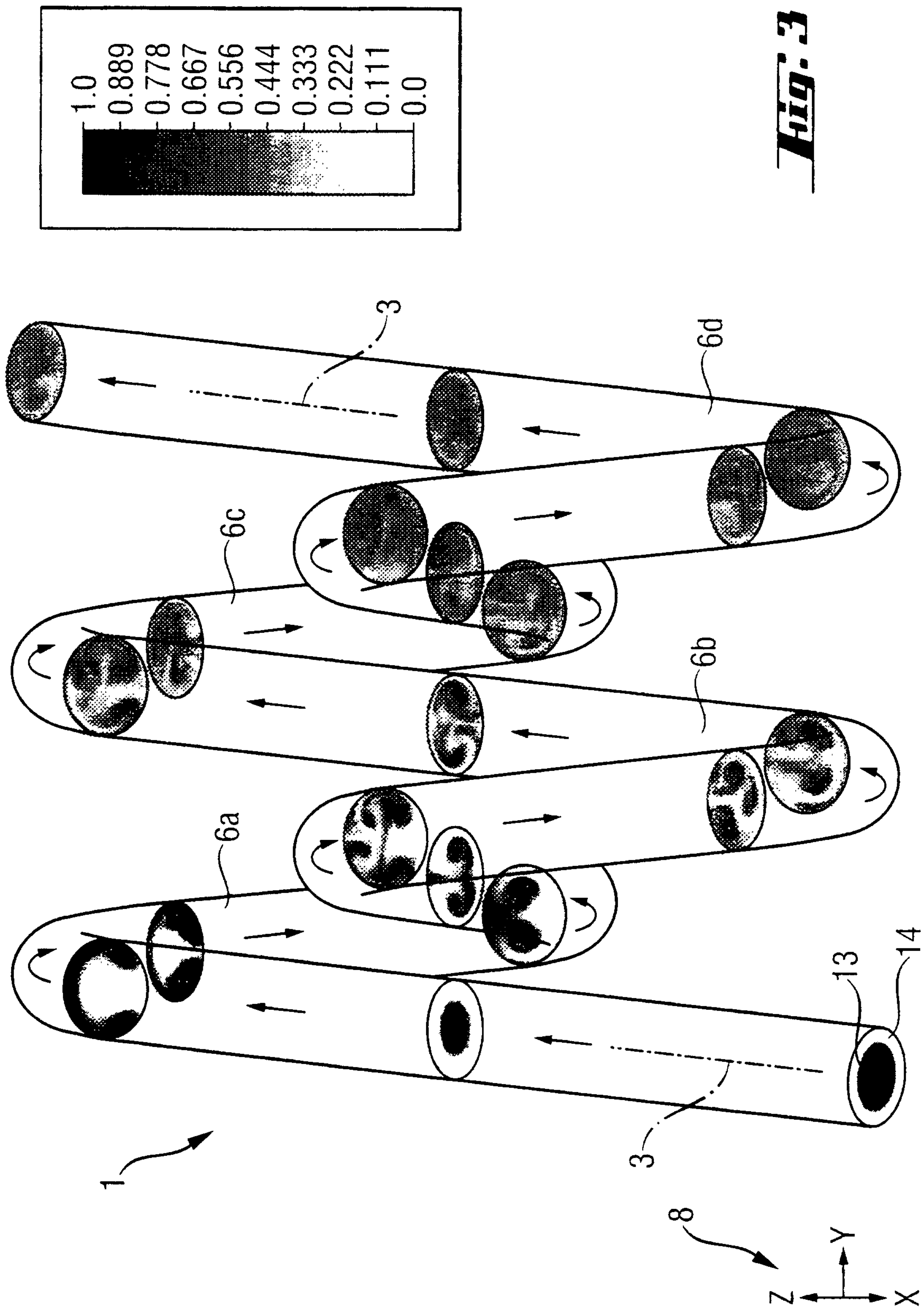
1.0
0.889
0.778
0.667
0.556
0.444
0.333
0.222
0.111
0.0
1
3
6a
6b
6c
6d
8
13
14
X
Y
Z

Fig. 3

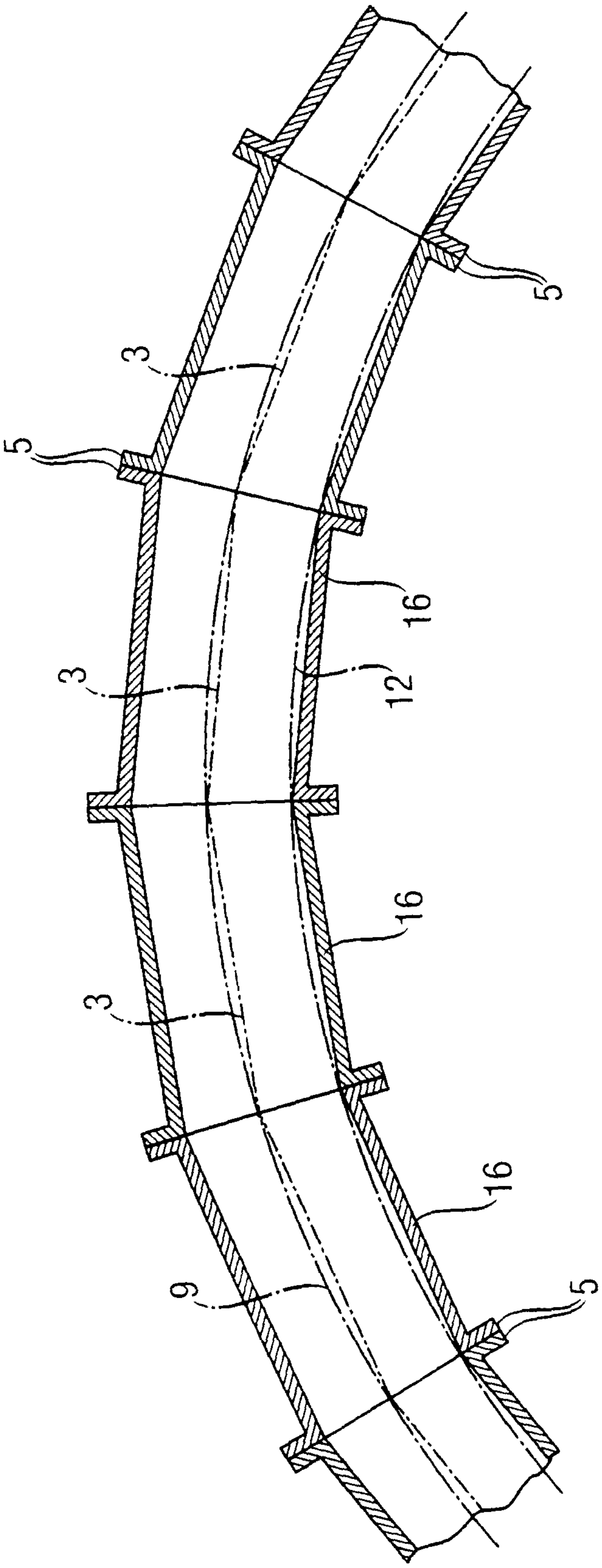


Fig. 4

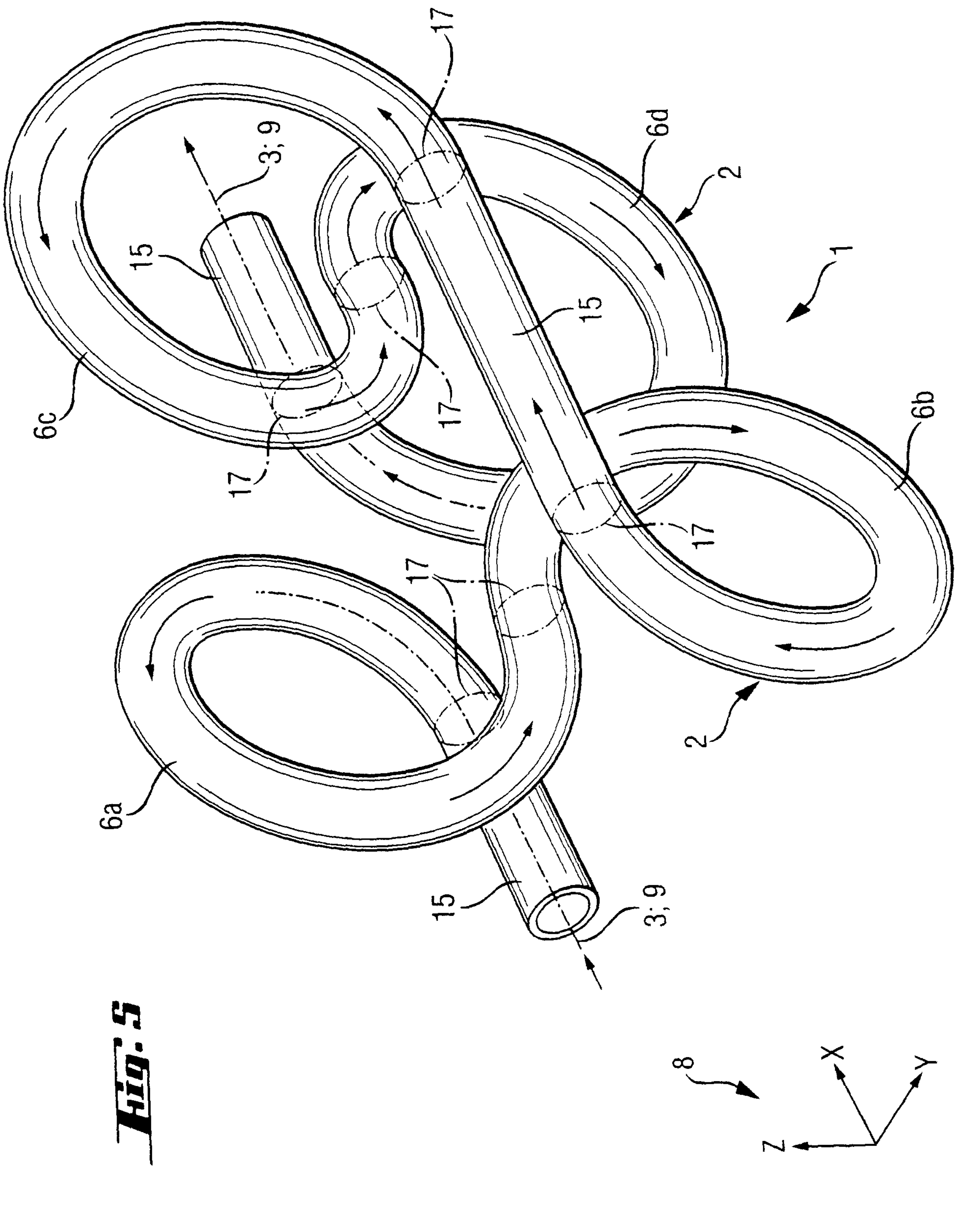


Fig. 5

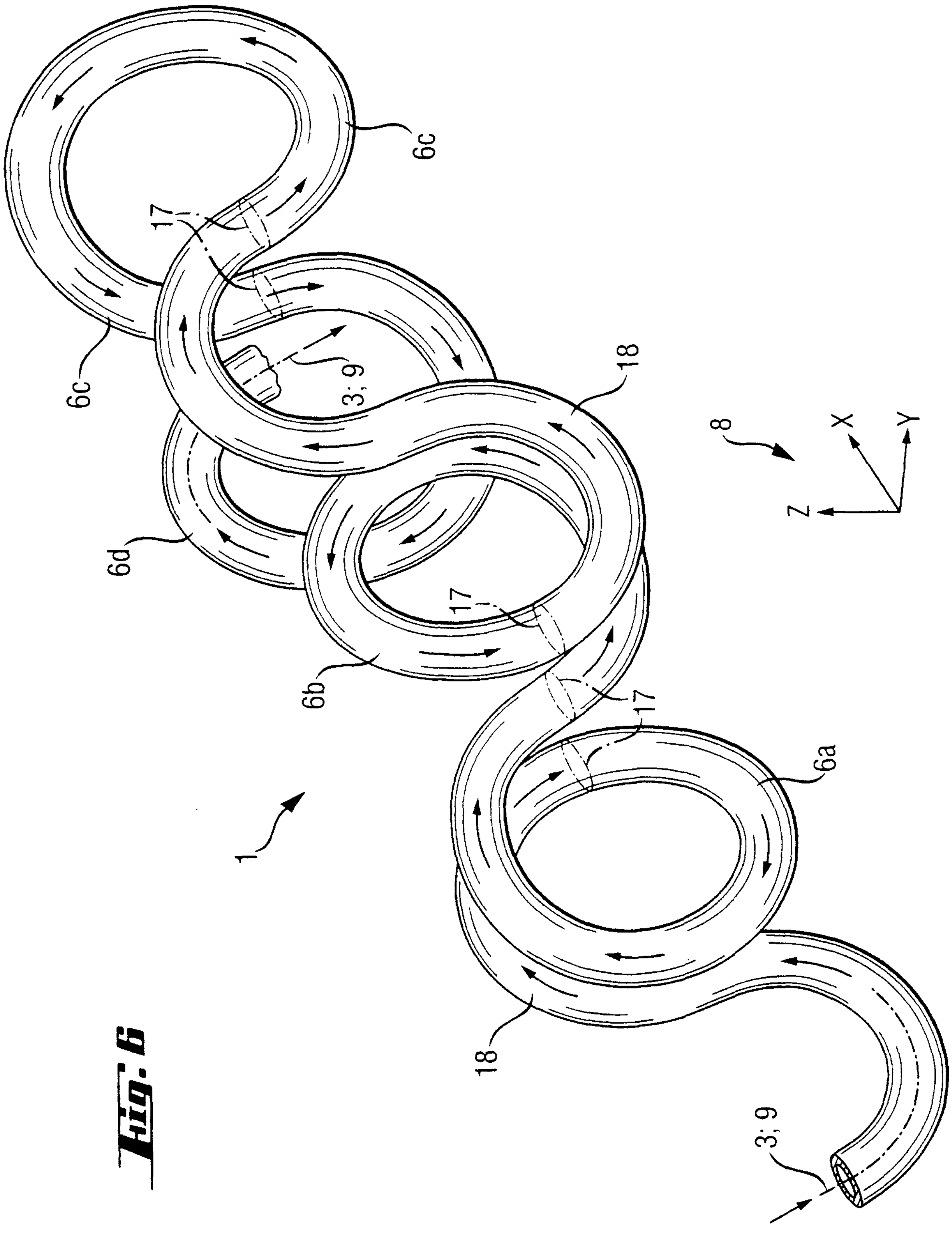


Fig. 6

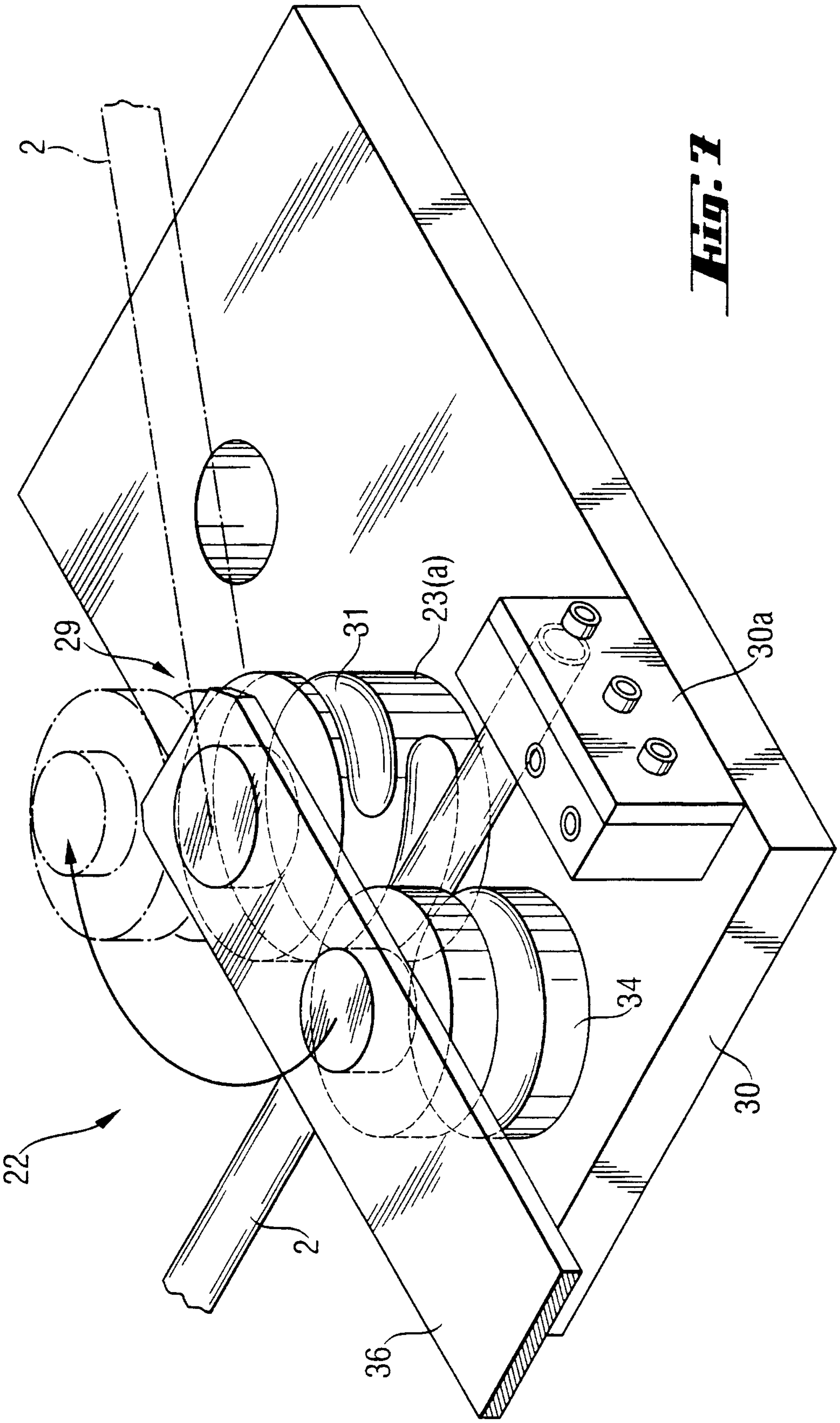


Fig. 1

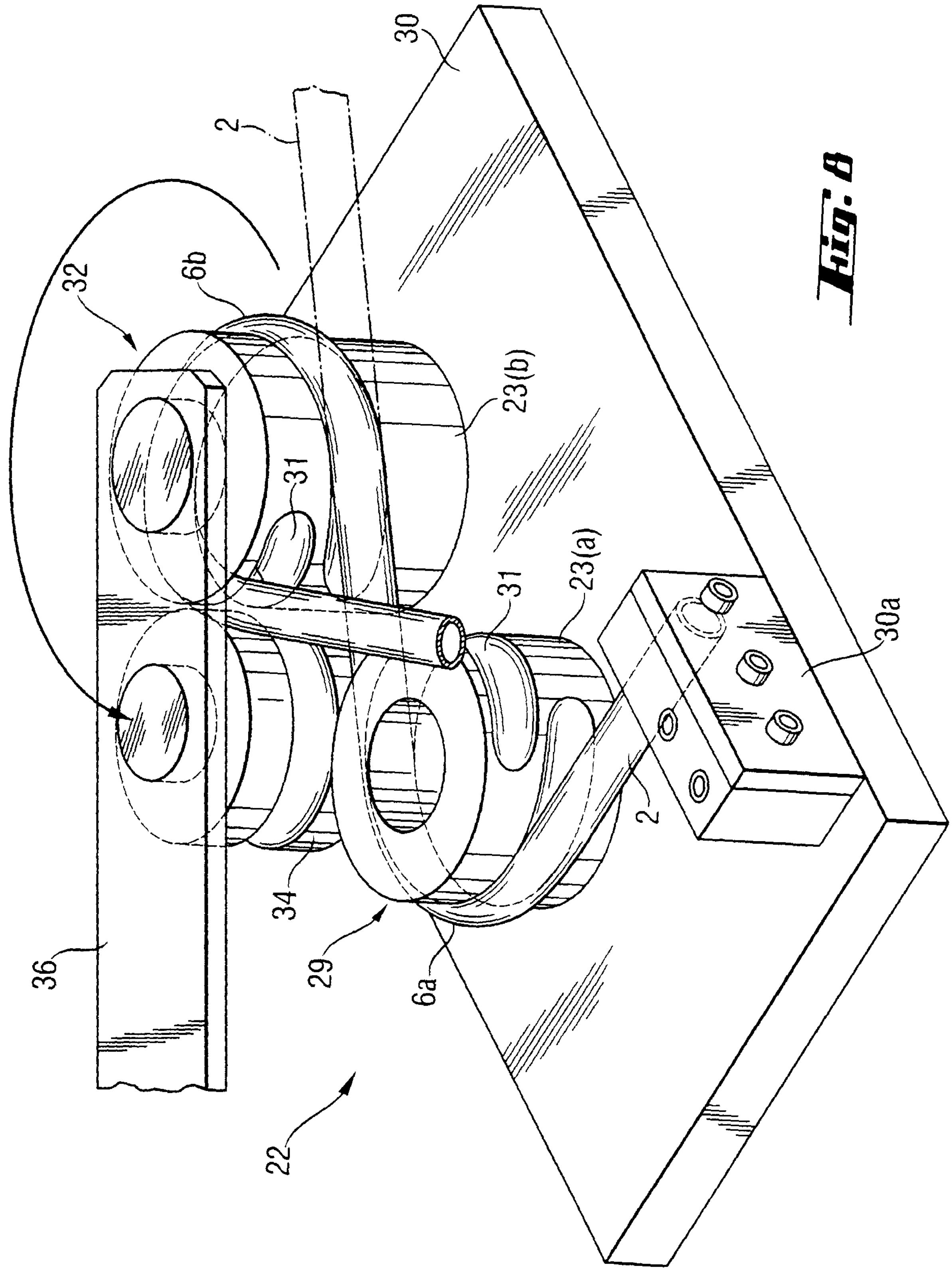


Fig. 8

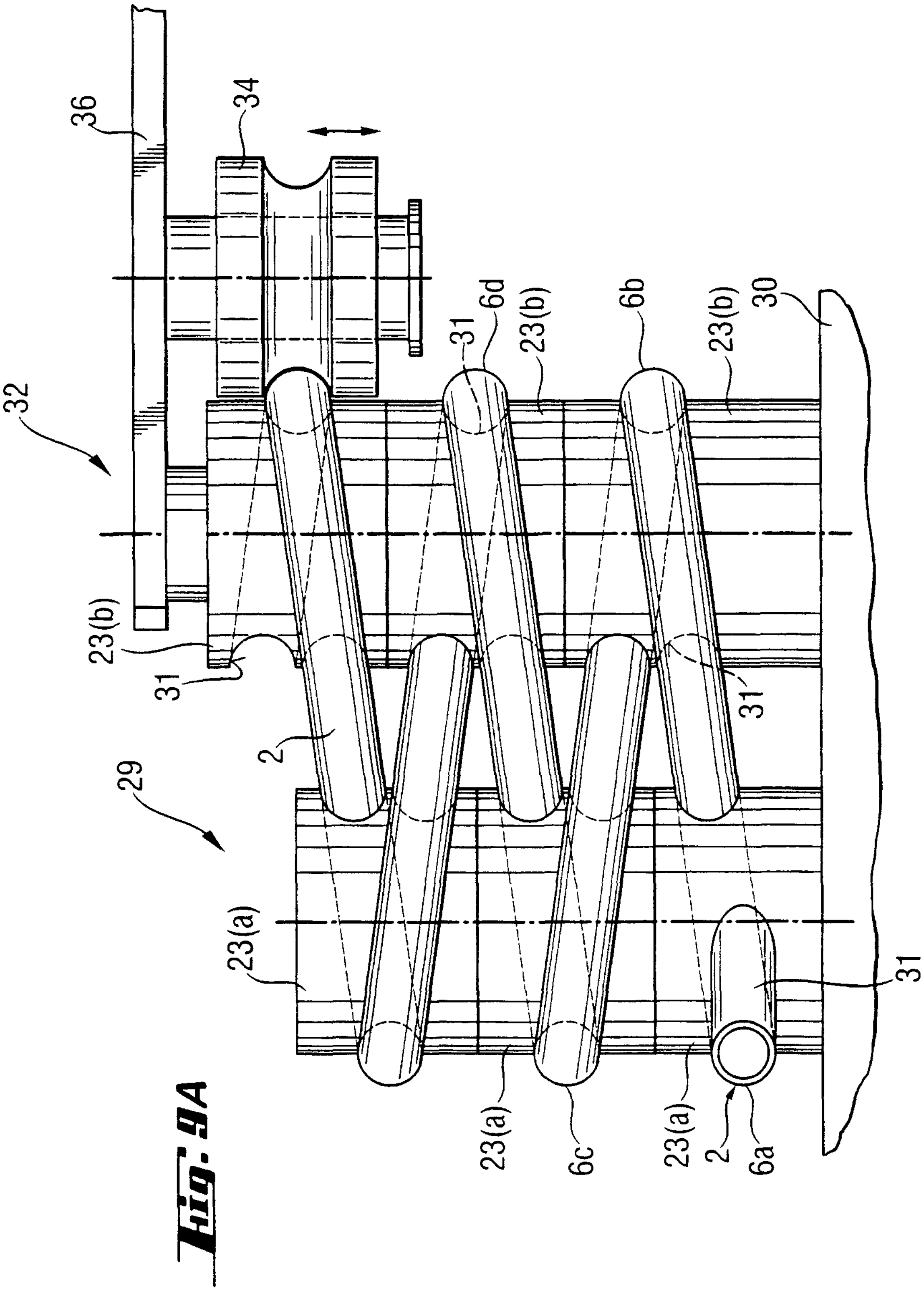


Fig. 9A

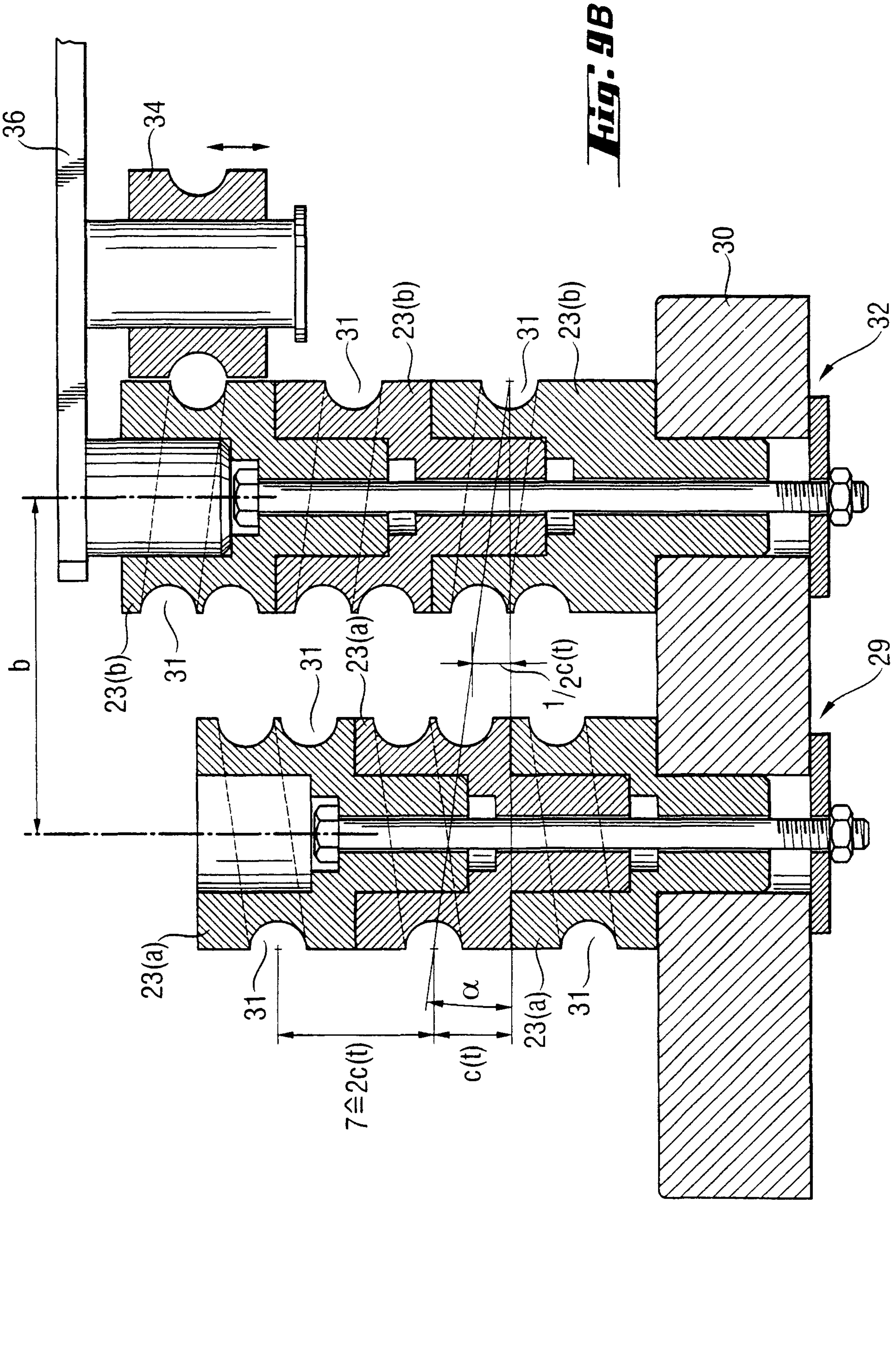


Fig. 9B

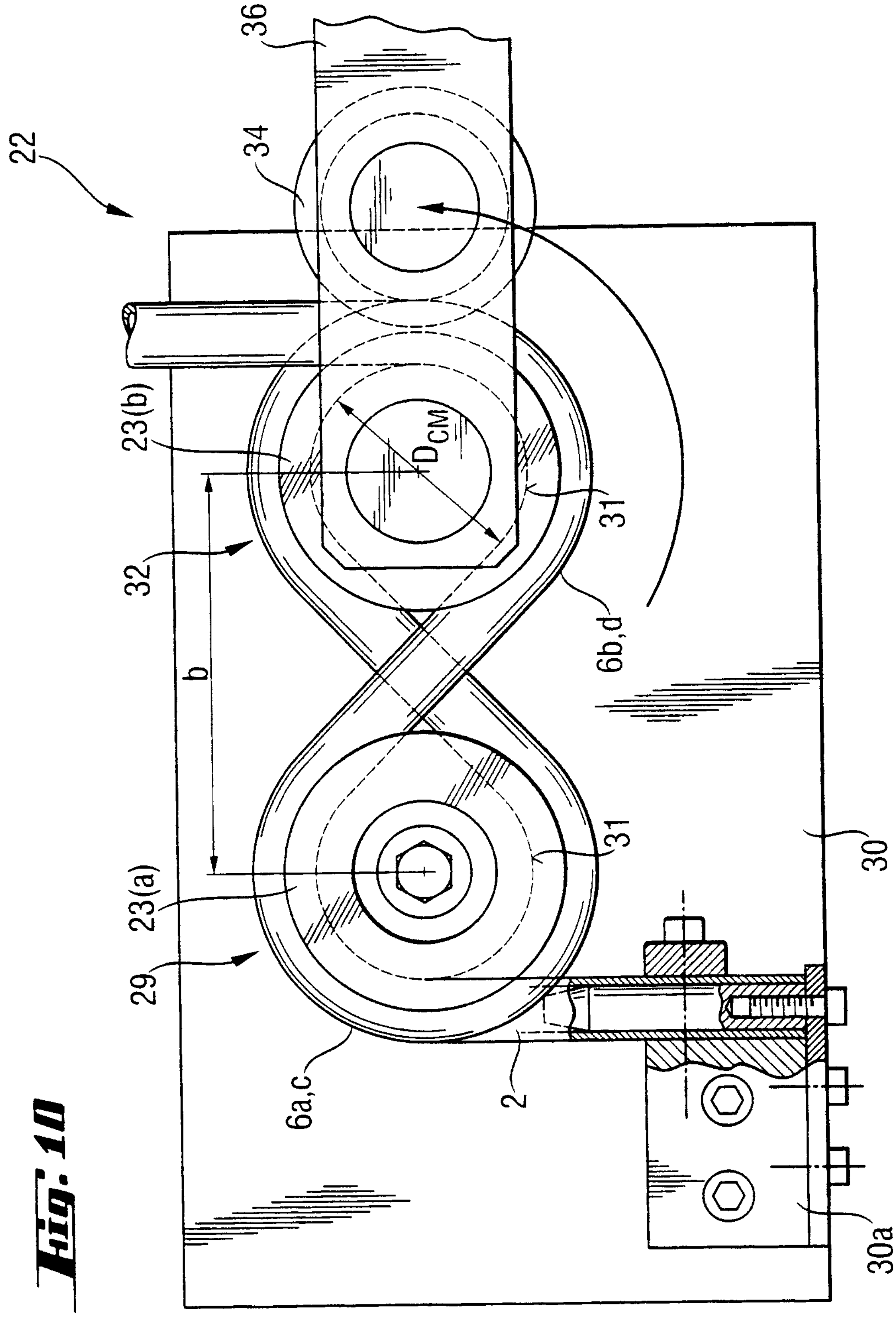


Fig. 10

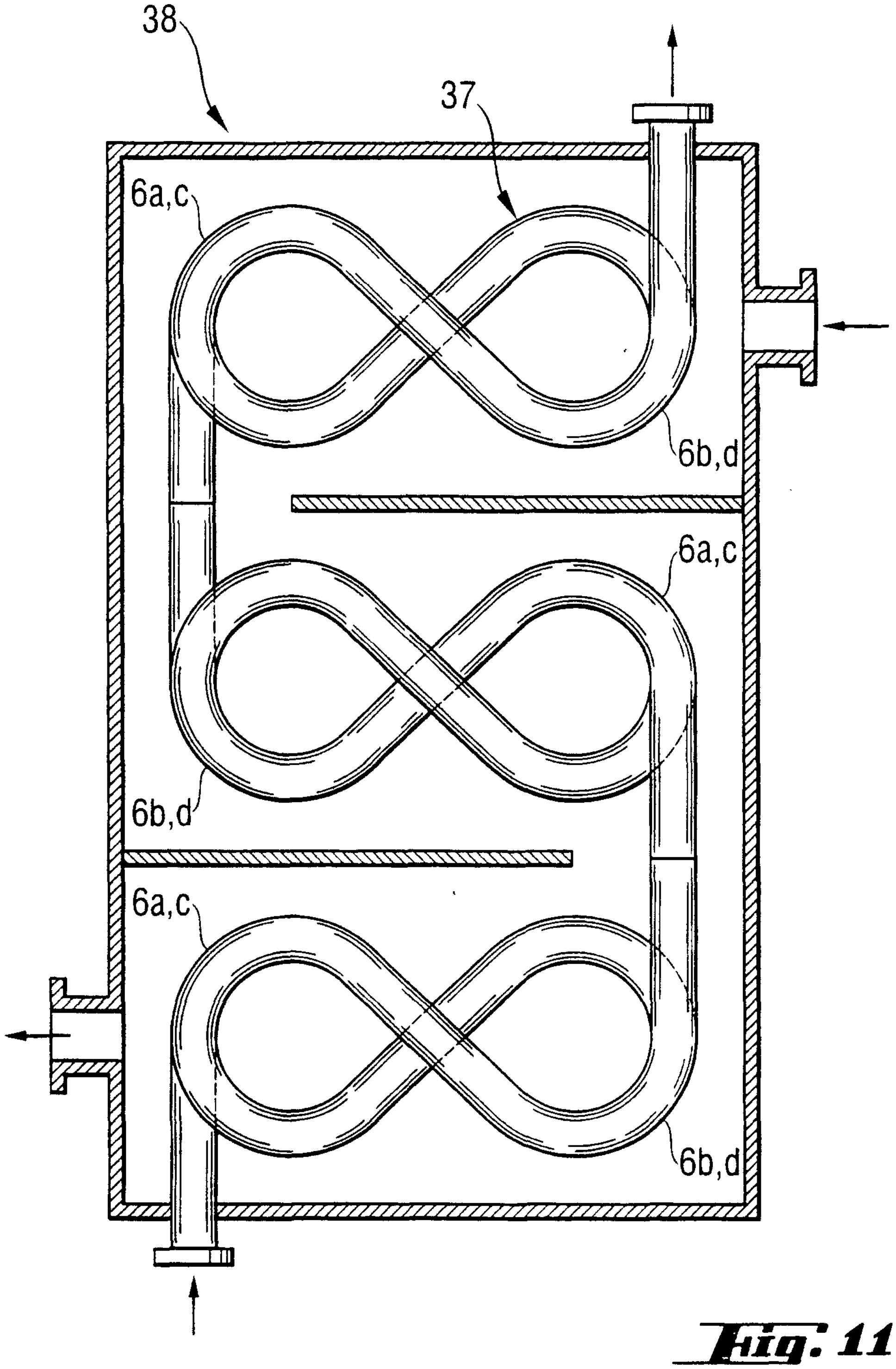


Fig. 11